# EUROPÄISCHE PATENTSCHRIFT

(11) **EP 2 470 851 B1**
(45) Veröffentlichungstag und Bekanntmachung des Hinweises auf die Patenterteilung: **03.04.2013**
(21) Anmeldenummer: 10729879.6
(22) Anmeldetag: 07.07.2010
(51) Int. Cl.: F28D 20/02, C09K 5/06, F01M 5/02

(54) **LATENTWÄRMESPEICHER UND VERFAHREN ZUM TEMPERIEREN EINER BRENNKRAFTMASCHINE**
LATENT HEAT ACCUMULATOR AND METHOD FOR TEMPERATURE CONTROL OF AN INTERNAL COMBUSTION ENGINE
ACCUMULATEUR DE CHALEUR LATENTE ET PROCÉDÉ DE RÉCHAUFFAGE D'UN MOTEUR À COMBUSTION INTERNE

(30) Priorität: 25.08.2009 DE 102009028863
(43) Veröffentlichungstag der Anmeldung: 04.07.2012
(73) Patentinhaber: Robert Bosch GmbH, 70442 Stuttgart (DE)
(72) Erfinder: BRANDES, Henrick, 71636 Ludwigsburg (DE); JOHANNABER, Martin, 71701 Schwieberdingen (DE); SCHULZ, Marcus, 71638 Ludwigsburg (DE); RAUCHFUSS, Lutz, 71665 Vaihingen/Enz (DE); WEBER, Nicole, 71701 Schwieberdingen (DE); HINDORF, Kay, 71634 Ludwigsburg (DE)
(86) Internationale Anmeldenummer: PCT/EP2010/059696
(87) Internationale Veröffentlichungsnummer: WO 2011/023442

(56) Entgegenhaltungen:
- WO-A1-89/08228
- DE-A1-102007 045 163
- DE-C1- 4 405 804
- FR-A1- 2 494 710
- JP-A- 1 046 582
- JP-A- 62 162 898

## Beschreibung

### Stand der Technik

Die vorliegende Erfindung betrifft eine Brennkraftmaschine nacht Anspruch 1, sowie ein Verfahren zum Temperieren einer Brennkraftmaschine nach Anspruch 5.

Latentwärmespeicher nutzen die Enthalpie reversibler thermodynamischer Zustandsänderungen eines Speichermediums, wie z.B. eines Phasenübergangs zwischen einer festen und einer flüssigen Phase, um thermische Energie in Form latenter, d.h. verborgener Wärme zu speichern. Beim Aufladen des Inhalts herkömmlicher Latentwärmespeicher werden meist spezielle Salze oder Paraffine als Speichermedium geschmolzen, die dazu sehr viel Wärmeenergie, die Schmelzwärme, aufnehmen. Da dieser Vorgang reversibel ist, gibt das Speichermedium genau diese Wärmemenge beim Erstarren wieder ab.

In Kraftfahrzeugen werden Latentwärmespeicher verwendet, um während des Betriebs des Kraftfahrzeugs anfallende überschüssige Energie zu speichern und diese bei Bedarf, beispielsweise bei einem Kaltstart, wieder zur Verfügung zu stellen. Um die Ladung des Latentwärmespeichers über einen längeren Zeitraum aufrechtzuerhalten und eine unbeabsichtigte Freigabe der gespeicherten Wärme zu vermeiden, muss das Speichermedium typischerweise durch eine aufwendige Wärmeisolierung oberhalb seiner Schmelztemperatur gehalten werden.

Die DE 10 2007 045 163 A1 schlägt eine Brennkraftmaschine nach dem Oberbegriff des Anspruchs 1 vor.

Um die gespeicherte Wärme zu entnehmen, wird vorgeschlagen, die Rekristallisation durch impulsartige Freisetzung mechanischer Energie mittels eines Impuls gebenden Aktors auszulösen.

Es ist daher wünschenswert, in einem verbesserten Latentwärmespeicher für ein Kraftfahrzeug Wärmenergie ohne aufwendige Wärmeisolierung über einen längeren Zeitraum speichern und zum gewünschten Zeitpunkt zuverlässig entnehmen zu können.

### Offenbarung der Erfindung

Demgemäß vorgesehen ist eine Brennkraftmaschine nach Anspruch 1. Die typische Schmelztemperatur des Speichermediums liegt dabei zwischen 30 und 120 °C.

Es wird ein Speichermedium verwendet, das bei Umgebungstemperaturen von etwa -10°C bis 58°C den Zustand unterkühlter Schmelze aufweist. Daher ist keine aufwendige Wärmeisolierung erforderlich, um zu vermeiden, dass das Speichermedium zu unerwünschter Zeit rekristallisiert und die gespeicherte Wärme unbeabsichtigt abgibt.

Die Brenskraftmaschine umfasst ferner einen Kristallisationskeimbereitsteller zum Bereitstellen eines Kristallisationskeims im Speichermedium, um im Zustand unterkühlter Schmelze eine Kristallisation des Speichermediums zur Freigabe von gespeicherter Wärme auszulösen.

Da der Kristallisationskeimbereitsteller ermöglicht - im Unterschied z.B. zu einer Schall- oder Druckwelle eines Aktors - durch das gezielte Bereitstellen eines Kristallisationskeims die Rekristallisation zum gewünschten Zeitpunkt zuverlässig auszulösen, kann die Wärme definiert abgegeben werden.

Unter weiteren Gesichtspunkten schafft die Erfindung ein Verfahren zum Temperieren einer Brennkraftmaschine nach Anspruch 1. In einem ersten Schritt des Verfahrens wird ein kristallisiertes Speichermedium i.d.R. unter Verwendung vorhandener Abwärmequellen des Fahrzeugs geschmolzen.

Dann kühlt das Speichermedium mitunter bis auf Umgebungstemperatur ab und unterkühlt dabei. Zur Freigabe gespeicherter Wärme wird ein Kristallisationskeim im Speichermedium bereitgestellt, um eine Kristallisation des Speichermediums auszulösen.

Gemäß einer bevorzugten Weiterbildung umfasst der Kristallisationskeimbereitsteller dem Brennkraftmaschine eine Trenneinrichtung zur vom Speichermedium thermisch getrennten Bewahrung von Kristallisationskeimen unterhalb des Schmelzpunkts. Dies ermöglicht, einen abgetrennten Teil des Speichermediums als Kristallisationskeim im kristallisierten Zustand zu bewahren, während - z.B. im Betrieb der Brennkraftmaschine - das übrige Speichermedium geschmolzen und so mit latenter Wärme aufgeladen wird. Der thermisch separierte Kristallisationskeim kann anschließend für eine erneute Benutzung des Latentwärmespeichers wiederverwendet werden, sodass ggf. Energie zur erneuten Erzeugung eines Kristallisationskeims - z.B. durch lokale Unterkühlung des Speichermediums - eingespart werden kann.

Gemäß einer anderen bevorzugten Weiterbildung ist der Kristallisationskeimbereitsteller der Brennkraftmaschine ausgebildet, das Speichermedium mit einer thermodynamischen Potentialgröße zu beaufschlagen, um den Kristallisationskeim im Speichermedium zu erzeugen. Die thermodynamische Potentialgröße wie z.B. Temperatur, Druck ist dabei zweckmäßig entsprechend dem Speichermedium so gewählt, dass zumindest in einem lokalen Bereich des Speichermediums Bedingungen eingestellt werden, die zuverlässig zur spontanen Bildung eines Kristallisationskeims führen. Dies ermöglicht eine besonders hohe Zuverlässigkeit des Zündmechanismus des Latentwärmespeichers, da dieser nicht davon abhängig ist, dass z.B. bei heißen Umgebungsbedingungen ein Kristallisationskeim in einer Trenneinrichtung tatsächlich erfolgreich aufbewahrt wurde. Vorzugsweise weist der Kristallisationskeimbereitsteller des Brennkraftmaschine eine Kühleinrichtung zur lokalen Abkühlung des Speichermediums auf die die statistisch hinreichend zuverlässige Kristallisationskeimentstehungstemperatur des Speichermediums einstellt. Dies ist besonders einfach und ungefährlich zu implementieren, z.B. mittels eines Peltier-Elements oder einer kaskadierten Anordnung von Peltier-Elementen.

Die erfindungsgemäße Brennkraftmaschine umfasst einen Latentwärmespeicher, wobei das Speichermedium im Bereich eines Ölsumpfs der Brennkraftmaschine zumindest teilweise an oder unter einem Ruheölspiegel des Ölsumpfs bei ruhender Brennkraftmaschine angeordnet ist. Auf diese Weise erwärmt das Speichermedium direkt das Schmieröl der Brennkraftmaschine und verringert so bei einem Kaltstart dessen Viskosität, was den Kraftstoffverbrauch und die Schadstoffemissionen der Brennkraftmaschine in den ersten Minuten nach dem Start vorteilhaft verringert. Das Speichermedium ist zumindest teilweise oberhalb eines Betriebsölspiegels des Öl sumpfs bei betriebener Brennkraftmaschine angeordnet. So wird erreicht, dass zunächst der Teil des Öls erwärmt wird, der sich bei ruhender Brennkraftmaschine in der Ölwanne nahe der Oberfläche (des Ruheölspiegels) befindet und typischerweise mittels eines Ansaugstutzens zuerst in den zu schmierenden Bereich der Brennkraftmaschine gelangt.

Ferner weist das Speichermedium der erfindungsgemäße Brennkraftmaschine eine, Oberfläche auf, die bei betriebener Brennkraftmaschine von in den Ölsumpf zurücklaufendem Öl überflossen ist. Auf diese Weise wird das Speichermedium von besonders heißem Öl, das direkt aus dem zu schmierenden Bereich - z.B. den Zylindern - der Brennkraftmaschine zunächst erwärmt wird, bevor sich das zurückfließende Öl mit dem (insbesondere kurz nach dem Start der Brennkraftmaschine) noch kälterem Öl im Ölsumpf vermischt. Dies ermöglicht, das Speichermedium schon bei kurzem Betrieb der Brennkraftmaschine wieder zuverlässig zu schmelzen und somit aufzuladen. Diese Oberfläche ist geneigt, sodass das zurückfließende Öl mit hinreichender Geschwindigkeit über die Oberfläche rinnt und dabei besonders viel seiner Wärme an das Speichermedium abgibt.

### Kurze Beschreibung der Zeichnungen

Die vorliegende Erfindung wird nachfolgend anhand bevorzugter Ausführungsformen und beigefügter Figuren erläutert. In den Figuren zeigen:
- Fig. 1A: eine schematische Querschnittsansicht einer Brennkraftmaschine mit einem Latentwärmespeicher gemäß einer Ausführungsform;
- Fig. 1 B: eine Querschnittsansicht eines Latentwärmespeichers gemäß einer Ausführungsform;
- Fig. 2: ein Prinzipschaubild eines Kühlmittelkreislaufs einer Brennkraftmaschine mit einem Latentwärmespeicher gemäß einer Ausführungsform;
- Fig. 3: ein Prinzipschaubild eines Kühlmittelkreislaufs einer Brennkraftmaschine mit einem Latentwärmespeicher gemäß einer weiteren Ausführungsform;
- Fig. 4: ein Diagramm des Zusammenhangs von Enthalpie und Temperatur bei einem Latentwärmespeichermaterial; und
- Fig. 5: ein Ablaufdiagramm eines Verfahrens zum Temperieren einer Brennkraftmaschine gemäß einer Ausführungsform.

In den Figuren bezeichnen dieselben Bezugszeichen gleiche oder funktionsgleiche Komponenten, soweit nichts Gegenteiliges angegeben ist.

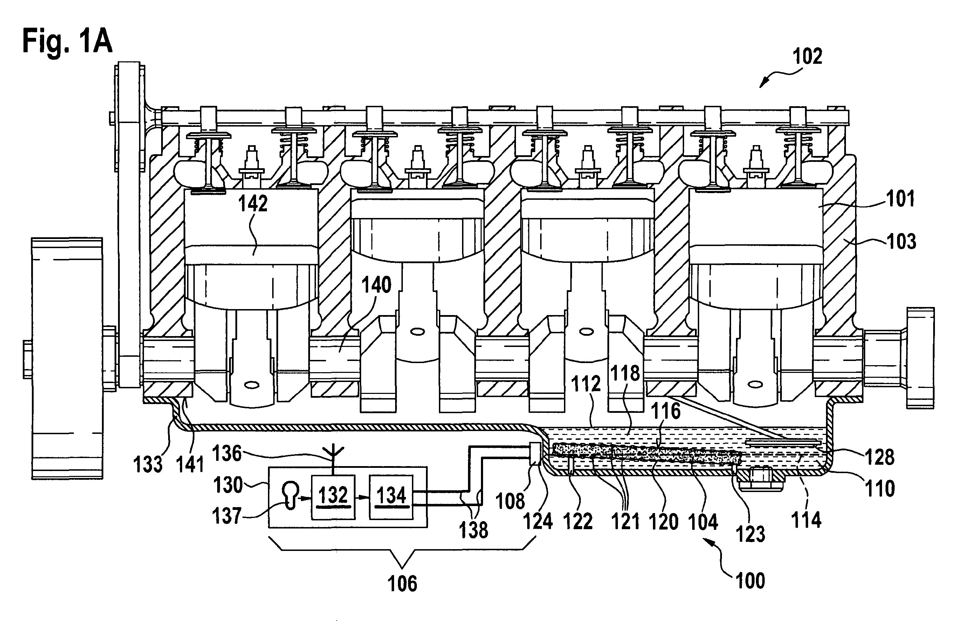

Eine in Fig. 1a in schematischer Querschnittsansicht gezeigte Brennkraftmaschine 102 ist beispielhaft als ein Ottomotor mit vier in einem Kurbelgehäuse 103 angeordneten Zylindern 101 ausgeführt. Eine von in den Zylindern 101 beweglichen Kolben 142 getriebene Kurbelwelle 140 ist unterhalb der Zylinder 101 im Kurbelgehäuse 103 gelagert. Das Kurbelgehäuse 103 ist nach unten hin offen und schließt mit einem umlaufenden unteren Rand 141 ab. Eine Ölwanne 133 zur Aufnahme von zum Betrieb der Brennkraftmaschine 102 benötigtem Schmieröl 118 ist an den unteren Rand 141 des Kurbelgehäuses 103 geschraubt und verschließt das Kurbelgehäuse 103 nach unten. Innerhalb der Ölwanne 133 ist ein vertiefter Bereich als Ölsumpf 110 ausgebildet, in dem sich bei ruhender Brennkraftmaschine 102 das Schmieröl 118 bis zu einem Ruheölspiegel 112 sammelt.

Im Ölsumpf 110 ist ein Ansaugschnorchel 128 angeordnet, über den die Brennkraftmaschine 102 im Betrieb Schmieröl 118 zur Schmierung der Zylinder 101 und der Kurbelwelle 140 (und sonstiger Teile) aus dem Ölsumpf entnimmt. Dabei sinkt der Ölspiegel im Ölsumpf 110 bis auf einen Betriebsölspiegel 114, an dem sich mit aus dem zu schmierenden Bereich des Kurbelgehäuses 103 zurückfließendem Öl ein Fließgleichgewicht einstellt.

Im Ölsumpf 110 ist ferner ein mit einer Umhüllung 120 umgebenes Speichermedium 104 eines Latentwärmespeicherkörpers 100 angeordnet. Die Umhüllung 120 ist z.B. aus einem Metall wie Aluminium gefertigt und weist bevorzugt eine Vielzahl von Rippen 121 auf, um eine große Oberfläche der Umhüllung 120 für erhöhten Wärmeübergang zwischen dem Speichermedium 104 die äußere Oberfläche der Umhüllung 120 umgebendem Öl 110 zu erreichen. Eine ähnlich berippte oder in sonstiger Art Wärme leitende Struktur kann zusätzlich innerhalb der Umhüllung 120 vorgesehen werden. Der Latentwärmespeicherkörper 100 ist unterhalb des Ruheölspiegels 112 angeordnet, sodass er im Ruhezustand der Brennkraftmaschine vollständig vom Öl 118 umgeben ist. Er ist wesentlich flächenartig entlang der Horizontalen auf etwa halber Höhe zwischen dem Ruheölspiegel 112 und dem Boden des Ölsumpfs 110 angeordnet, sodass er das im Ruhezustand im Ölsumpf befindliche Schmieröl 118 in einen oberhalb des Latentwärmespeicherkörpers 100 liegenden Bereich und einen unterhalb des Latentwärmespeicherkörpers 100 liegenden Bereich unterteilt. Im Betrieb der Brennkraftmaschine 102 ragt eine obere Oberfläche 116 des Latentwärmespeicherkörpers 100 über den dann herrschenden Betriebsölspiegel 114 hinaus. Dabei ist der Latentwärmespeicherkörper 100 auf einem hohen 122 und einem niedrigen 123 Fuß abgestützt, sodass die obere Oberfläche 116 gegenüber der Horizontalen geringfügig zum unteren Ende des Ansaugschnorchels 128 hin geneigt ausgebildet ist. An dem vom Ansaugschnorchel 128 abgewandten Ende berührt der Latentwärmespeicherkörper 100 die seitliche Wandung 124 des Ölsumpfs 110.

An der Außen- oder Innenseite der Wandung 124 des Ölsumpfs 110 ist eine Starteinrichtung z.B. ein Peltier-Element 108 derart angebracht, dass es mittel- oder unmittelbar mit dem die Wandung 124 von innen zugewandten Latentwärmespeicherkörper 100 in Kontakt ist. Das beispielhaft genannte Peltier-Element 108 ist über zwei Zuleitungsdrähte 138 mit einem Steuergerät 138 des Latentwärmespeichers 100 verbunden. Das Steuergerät 130 enthält eine Ansteuereinheit 134 zur Ansteuerung des Peltier-Elements 108 und einen Anforderungsdetektor 132, der in einer Anwendungsform mit einer Antenne 136 für eine Zentralverriegelung eines die Brennkraftmaschine 102 aufweisenden Kraftfahrzeugs verbunden ist. Weiterhin verbunden ist der Anforderungsdetektor 132 mit einer Zündschlosseinheit 137 zum Start der Brennkraftmaschine 102.

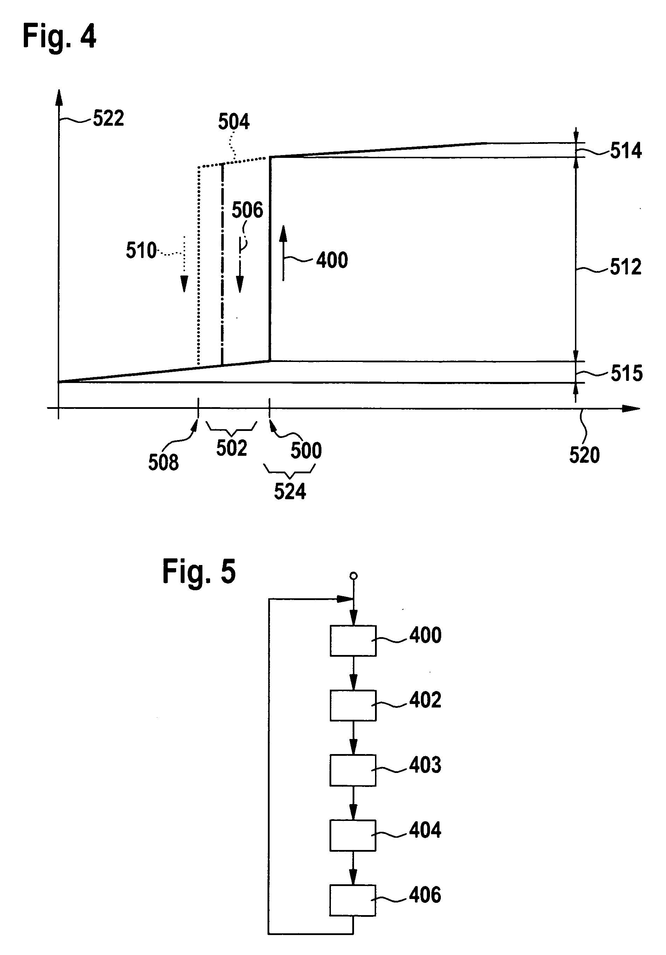

Das Speichermedium 104 ist z.B. als ein Salzhydrat ausgebildet, dessen Eigenschaften in dem in Fig. 4 gezeigten Enthalpiediagramm schematisch dargestellt sind. An der waagerechten Temperaturachse 520 ist die Schmelztemperatur 500 des Speichermediums markiert. Wird das kristalline Speichermedium beginnend vom linken Rand der Temperaturachse 520 bis zum Schmelzpunkt 500 erwärmt, wächst seine entlang einer vertikalen Enthalpieachse 522 aufgetragene Enthalpie um einen im Zuge dieser Erwärmung aufgenommenen ersten Betrag 515 sensibler (d.h. fühlbare) Wärme. Führt man weiter Wärme zu, schmilzt 400 das Speichermedium, wobei es bei konstanter Temperatur am Schmelzpunkt latente Wärme 512 aufnimmt. Ist das Speichermedium vollständig geschmolzen, führt weiteres Zuführen von Wärme zur Erhöhung der Temperatur über den Schmelzpunkt 500 hinaus, wobei im Zuge dieser Erwärmung ein weiterer Betrag 514 sensibler Wärme aufgenommen wird. Kühlt das geschmolzene Speichermedium wieder ab, verbleibt es auch unterhalb des Schmelzpunktes 500 in einem metastabilen Zustand 504 unterkühlter Schmelze, bis ein Temperaturbereich 508 erreicht wird, in dem - mit sinkender Temperatur - mit zunehmender Wahrscheinlichkeit eine spontane Rekristallisation 510 der Schmelze einsetzt und die latente Wärme 512 abgegeben wird. Wird im Zustand 504 unterkühlter Schmelze ein Kristallisationskeim im Speichermedium bereitgestellt, kristallisiert 506 das Speichermedium auch oberhalb der Kristallisationskeimentstehungstemperatur 508.

Als Speichermedium ist ein Material gewählt, bei dem einerseits die Schmelztemperatur 500 in einem erwünschten Temperaturbereich 524 des Schmieröls liegt und sich andererseits der metastabilen Zustand 504 unterkühlter Schmelze über einen wesentlichen Teil des üblichen Umgebungstemperaturbereichs 502 erstreckt, in dem die Brennkraftmaschine betrieben wird. Ein geeignetes Material im Falle von Brennkraftmaschinen in Kraftfahrzeugen, die in gemäßigten Klimazonen verwendet werden, ist z.B. Natriumacetat-Trihydrat, dessen Schmelzpunkt 500 bei 58° C liegt.

Im regulären Betrieb der Brennkraftmaschine 102 aus Fig. 1A stellt sich wie oben beschrieben der Betriebsölspiegel 114 ein, während heißes, aus dem Kurbelgehäuse 103 rücklaufendes Öl über die obere Oberfläche 116 des Latentwärmespeicherkörpers 100 rinnt. Hierdurch wird - bei üblichen Fahrstecken - das Speichermedium 104 zuverlässig bis über seinen Schmelzpunkt 500 erhitzt, sodass es vollständig schmilzt. Wird nun die Brennkraftmaschine 102, die hier beispielhaft als in einem Kraftfahrzeug eingebaut angenommen werden soll, abgestellt und einer Umgebungstemperatur von z.B.-15° C ausgesetzt, fließen wesentliche Teile des Öl 118 in den Ölsumpf 110 zurück. Die gesamte Brennkraftmaschine einschließlich des Öls 118 und des Speichermediums 104 kühlt allmählich auf die Umgebungstemperatur von -15° C ab.

Nähert sich nun beispielsweise ein Fahrzeugführer dem Kraftfahrzeug und löst über die Antenne 136 die Zentralverriegelung aus, schließt der Anforderungsdetektor 132 hieraus, dass die Brennkraftmaschine 102 in Kürze benutzt werden soll und gibt ein entsprechendes Signal an die Ansteuereinheit 134 weiter. Die Ansteuereinheit 134 beaufschlagt über ein Beaufschlagungszeitraum die Starteinrichtung / Peltier-Element 108 mit einem elektrischen Strom, wobei Aktivierungsintervall, Stromstärke und Stromrichtung so gewählt sind, das die gesamte Konfiguration soweit abgekühlt wird, dass mit statistisch hoher Wahrscheinlichkeit Kristallisation ausgelöst wird. Mittels eines Temperatursignals oder einer Abschätzung der Temperatur wird der Beaufschlagungszeitraum und die Stromstärke bedarfsgerecht von der Ansteuereinheit 134 festgelegt.

Die Starteinrichtung / das Peltier-Element 108 einschließlich seiner Zuleitungen 138 und des Steuergeräts 130 wirken als eine Vorrichtung zum Bereitstellen eines Kristallisationskeims im Speichermedium 104. Durch eine lokale Abkühlung des Speichermediums 104 bis zum bzw. unter den Kristallisationskeimentstehungsbereich 508 entsteht in der unterkühlten Schmelze spontan ein Kristallisationskeim, von dem aus das gesamte Speichermedium 104 in einer Kettenreaktion kristallisiert und die latente Wärme freigibt. Durch die Umhüllung 120 erwärmt das Speichermedium 104 das dem Speichermedium 104 benachbarte Öl. Startet nun der Fahrzeugführer mittels der Zündschlosseinrichtung 137 die Brennkraftmaschine, so saugt diese über den Ansaugschnorchel 128 zunächst das oberhalb des Speichermediums 104 befindliche Öl an, das aufgrund des erhöhten Orts des Speichermediums 104 und der Konvektion am stärksten angewärmt und daher am dünnflüssigsten ist. Erst im weiteren Betrieb der Brennkraftmaschine kommt es zu einer vollständigen Durchmischung und gleichmäßigen Erwärmung des gesamten Öls.

Die in Fig. 1A gezeigte Ausführungsform kann auf vielfältige Weise modifiziert werden. So kann z.B. die Starteinrichtung / das Peltier-Element 108 alternativ innerhalb des Ölsumpfs 110 direkt an der Umhüllung 120 des Speichermediums 104 angeordnet werden, oder in einer Durchführung durch die Wandung 124 des Ölsumpfs 110. Anstelle des beispielhaft genannten Peltier-Elements 108 oder in Verbindung mit demselben können Starteinrichtungen verwendet werden, die das Speichermedium 104 lokal mit einem statischen Druck beaufschlagen, um thermodynamische Bedingungen einzustellen, unter denen sich ein Kristallisationskeim spontan bilden kann.

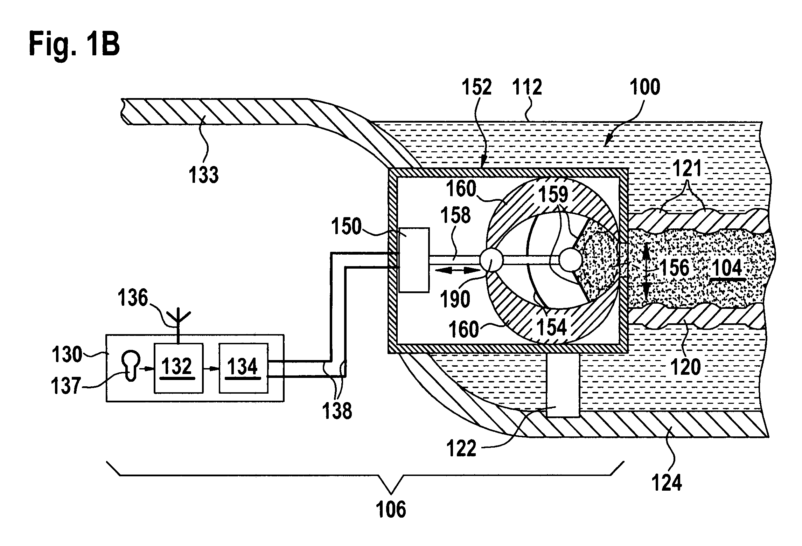

Figur 1 B zeigt einen Latentwärmespeicher, bei dem die Kristallisationskeimbereitstellungseinrichtung 106 anstelle der Starteinrichtung / des Peltier-Elements 108 aus Fig. 1A eine Trenneinrichtung 152 zur vom Speichermedium 104 thermisch getrennten Bewahrung des Kristallisationskeims üblicherweise unterhalb des Schmelzpunkts 500 aufweist. Die Trenneinrichtung 152, die in einer Durchführung durch die Wandung 124 des Ölsumpfs 110 und die Umhüllung 120 des Speichermediums 104 angeordnet ist, umfasst beispielhaft eine aus thermisch isolierenden, um einen Drehpunkt 190 gegeneinander verschwenkbare Halbschalen 160 gebildete Zange, die in geschlossenem Zustand einen mit Speichermedium gefüllten Separationsraum 156 vom übrigen Speichermedium 104 abtrennen und thermisch isolieren kann. Die Halbschalen 160 sind über eine durch den Drehpunkt 190 geführte Zugstange 158 und mit dieser drehbar gekoppelte Zweigstangen 159 mit einem Aktor 150 verbunden, der durch das Steuergerät 130 ansteuerbar ist.

Im Betrieb einer Brennkraftmaschine mit dem dargestellten Latentwärmespeicher wird in dem von den durch eine Rückstellfeder 154 geschlossenen Halbschalen 160 thermisch abgetrennten Raum generell ein Teil des Speichermediums 104 in kristallinem Zustand unterhalb der Schmelztemperatur des Speichermediums 104 aufbewahrt. Der Separationsraum 156 kann z.B. thermisch insoweit leitend mit dem außerhalb der Brennkraftmaschine liegenden Raum verbunden werden, dass die Temperatur im Separationsraum 156 auch im Dauerbetrieb der Brennkraftmaschine nicht den Schmelzpunkt erreicht.

Steuert bei einem Kaltstart die Ansteuereinheit 134 des Steuergeräts 130 den Aktor 150 an, übt dieser eine Zugkraft auf die Zugstange 158 aus, so dass sich die Halbschalen 160 öffnen und den im Separationsraum bewahrten Kristallisationskeim in Berührung mit dem übrigen Speichermedium 104 bringen, das sich im Zustand unterkühlter Schmelze befindet. Infolge dessen kristallisiert das gesamte Speichermedium 104 in einer Kettenreaktion und gibt seine latente Wärme frei. Noch bevor die gesamte Schmelze in den kristallinen Zustand übergangen ist, wird die Stromzufuhr zum Aktor unterbrochen, sodass die Rückstellfeder die Halbschalen 160 wieder schließt, die mit wenig Kraftaufwand in der noch nicht vollständig kristallisierten Schmelze bewegbar sind. Die geschlossenen Halbschalen 160 schließen dabei wieder Kristalle ein, trennen sie und isolieren sie thermisch vom Rest des Speichermediums.

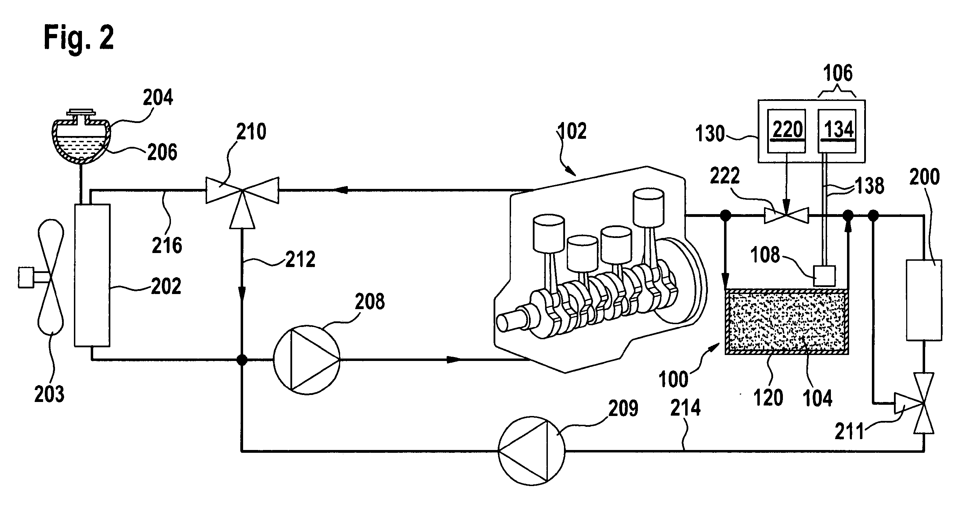

Figur 2 zeigt schematisch den Kühlungs- und Heizungskreislauf eines Kraftfahrzeuges mit einer Brennkraftmaschine 102, einem Kühler 202, einem Kühlerthermostatventil 210, einem Heizungswärmetauscher 200, einem Heizungsthermostatventil 21, einer Hauptwasserpumpe 208 und einer Zusatzwasserpumpe 209. Die Hauptwasserpumpe 208 kann z.B. über eine nicht gezeigte Antriebsverbindung o. ä. mit der Brennkraftmaschine 102 gekoppelt sein, während der Antrieb der Zusatzwasserpumpe 209 durch einen eigenen elektrischen Antriebsmotor erfolgen kann. Bei laufender, noch kalter Brennkraftmaschine 102 fließen wesentliche Teile des Kühlmittels 206 bei geschlossenem Kühlerthermostatventil 210 zunächst über eine Leitung 212 und die Hauptwasserpumpe 208 zwecks schnellerer Erwärmung der Brennkraftmaschine 102 direkt zu dieser zurück. Ein Kühlkreislauf 216 über die Brennkraftmaschine 102, das Kühlerthermostatventil 210, den Kühler 202 und die Hauptwasserpumpe 208 wird aktiv, sobald das Kühlmittel 206 eine Temperatur erreicht hat, bei der das Kühlerthermostatventil 210 öffnet.

Ein Heizungskreislauf 214, der über die Brennkraftmaschine 102 und den Heizungswärmetauscher 200 führt, wird durch die Hauptwasserpumpe 208 und ggf. die Zusatzwasserpumpe 209 getrieben. Zwischen der Brennkraftmaschine 102 und dem Wärmetauscher 200 der Heizung ist ein Latentwärmespeicher 104 im Heizungskreislauf 214 angeordnet und kann durch ein parallel angeordnetes Latentwärmespeicherventil 222 überbrückt werden. Der Latentwärmespeicher 104 enthält ein Speichermedium 104, das von nicht gezeigten z.B. schlangenförmigen Leitungen des Heizungskreislaufs 214 durchzogen ist, sodass bei Durchströmen des Latentwärmespeichers mit dem Kühlmittel 206 Wärme zwischen dem Kühlmittel 206 und dem Speichermedium 104 des Latentwärmespeichers 100 austauschbar ist. In mittel- oder unmittelbarem Kontakt des Latentwärmespeichers 100 ist eine Starteinrichtung 108 zur Bereitstellung eines Kristallisationskeims im Speichermedium 104 angebracht. Ein Steuergerät 130 weist neben einer Ansteuereinheit 134 für die Starteinrichtung eine Flusssteuereinheit 220 zur Regelung des Kühlmittelflusses durch den Latentwärmespeicher 100 auf.

Vor einer Fahrt mit dem Kraftfahrzeug, ausgelöst z.B. durch die Fernentriegelung oder das Zündschloss, leitet die Ansteuereinheit 134 mit der Starteinrichtung 108 z.B. durch lokale Unterkühlung des Speichermediums die Kristallisation durch spontane Bildung von Kristallisationskeimen im Speichermedium ein. Gleichzeitig wird das Latentwärmespeicherventil 222 gedrosselt/geschlossen und der elektrische Antriebsmotor der Zusatzwasserpumpe 209 eingeschaltet, um aufgeheiztes Kühlmedium 206 aus dem Latentwärmespeicher 100 in den Heizungswärmetauscher 200 und/oder die Brennkraftmaschine 102 zu pumpen.

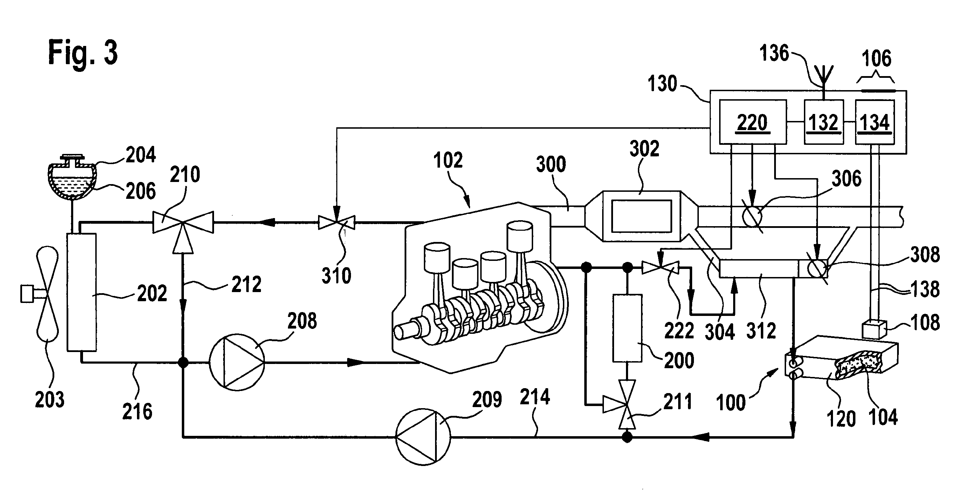

Figur 3 zeigt einen Kühl- und Heizungskreislauf eines weiteren Kraftfahrzeugs. Abweichend von der Ausführungsform aus Fig. 2 weist der Heizungskreislauf 214 einen Abgaswärmetauscher 312 auf, der in einer Zweigleitung 304 des Abgasstrangs 300 stromabwärts eines Dreiwegekatalysators 302 angeordnet ist. Das mit der Flusssteuereinheit 220 verbundene Latentwärmespeicherventil 222, der Abgaswärmetauscher 312 und der Latentwärmespeicher 100 sind innerhalb des Heizungskreislaufs 214 miteinander in Reihe angeordnet, parallel zum Heizungswärmetauscher 200. Die Reihenfolge der Parallelanordnung ist dabei hier nur expemplarisch gezeigt.

In der Abgaszweigleitung 304 und in dem parallel zu dieser verlaufenden Abschnitt der Hauptleitung des Abgasstrangs 300 sind jeweils Regelklappen 308, 306 angeordnet. Diese und ein Hauptkreislaufventil 310 im Hauptkreislauf 216 sind ebenso wie das Latentwärmespeicherventil 222 mit der Flusssteuereinheit 220 verbunden, von der sie im Betrieb der Brennkraftmaschine 102 koordiniert ansteuerbar sind.

Die in Fig. 3 gezeigte Anordnung ermöglicht, den Latentwärmespeicher 100 zum Schmelzen des Speichermediums 104 auf besonders hohe Temperaturen zu erwärmen. Hierdurch können Speichermedien mit einem besonders hohen Schmelzpunkt eingesetzt werden, die Wärme bei entsprechend erhöhtem Temperaturniveau wieder abgeben. Ein weiterer Vorteil besteht darin, dass auch bei sehr kurzen Fahrten mit dem Kraftfahrzeug, bei denen sich der Öl- / Kühlwasserkreislauf der Brennkraftmaschine nicht vollständig erwärmt, aufgrund der hohen Temperaturen im Abgasstrang das Speichermedium 104 zur Aufladung des Latentwärmespeichers 100 zuverlässig geschmolzen werden kann.

Figur 5 zeigt ein Ablaufdiagramm eines Verfahrens zum Temperieren einer Brennkraftmaschine eines Kraftfahrzeugs, bei dem in einem ersten Schritt 400 ein kristallisiertes Speichermedium geschmolzen wird, um Schmelzwärme zu speichern. Dies erfolgt z.B. während der Fahrt unter Ausnutzung überschüssiger Abwärme. Im folgenden Schritt 402 kühlt das Speichermedium ggf. bis auf Umgebungstemperatur ab, nachdem das Fahrzeug abgestellt wurde. Dabei bildet sich eine unterkühlte Schmelze des Speichermediums.

In Schritt 403 wird ein Anforderungssignal des Fahrzeugführers, z.B. ein Fernentriegelungssignal, empfangen. In Schritt 404 wird auf das in Schritt 403 empfangene Anforderungssignal hin ein Kristallisationskeim im Speichermaterial bereitgestellt, um eine Kristallisation des Speichermediums zur Freigabe gespeicherter Wärme z.B. das Schmieröl und/oder das Kühlmittel der Brennkraftmaschine auszulösen. In Schritt 406 wird ein Teil des Speichermediums als Kristallisationskeim vom übrigen Speichermedium getrennt und thermisch vom übrigen Speichermedium isoliert, bevor dieses wiederum in Schritt 400 durch Erwärmen über den Schmelzpunkt hinaus geschmolzen wird.

## Patentansprüche

1. Brennkraftmaschine (102), aufweisend:
- einen Ölsumpf (110);
- ein kristallisierbares Speichermedium (104) zur Speicherung von Wärme unter Ausnutzung der Enthalpie eines Schmelzvorgangs (400), welches
i. den Zustand unterkühlter Schmelze (504) bei Umgebungstemperatur (502) aufweisen kann, wobei die Brennkraftmaschine **dadurch gekennzeichnet ist, daß** das Speichermedium
ii. im Bereich des Ölsumpfs (110) zumindest teilweise an oder unter einem Ruheölspiegel (112) des Ölsumpfs (110) bei ruhender Brennkraftmaschine (102), und zumindest teilweise oberhalb eines Betriebsölspiegels (114) des Ölsumpfs (110) bei betriebener Brennkraftmaschine (102) angeordnet ist, und
iii. eine geneigte Oberfläche (116) aufweist, welche bei betriebener Brennkraftmaschine (102) von in den Ölsumpf (110) rücklaufendem Öl (118) überflossen ist; und
- einen Kristallisationskeimbereitsteller (106) zum Bereitstellen eines Kristallisationskeims im Speichermedium (104), um im Zustand unterkühlter Schmelze (504) eine Kristallisation (506) des Speichermediums (104) zur Freigabe von gespeicherter Wärme auszulösen.

2. Brennkraftmaschine (102) nach Anspruch 1, wobei der Kristallisationskeimbereitsteller (106) eine Trenneinrichtung (152) zur vom Speichermedium (104) thermisch getrennten Bewahrung des Kristallisationskeims unterhalb des Schmelzpunkts (500) aufweist.

3. Brennkraftmaschine (102) nach Anspruch 1 oder 2, wobei der Kristallisationskeimbereitsteller (106) ausgebildet ist, das Speichermedium (104) mit einer thermodynamischen Potentialgröße (T, p) zu beaufschlagen, um den Kristallisationskeim im Speichermedium (104) zu erzeugen.

4. Brennkraftmaschine (102) nach Anspruch 3, wobei der Kristallisationskeimbereitsteller (106) eine Kühleinrichtung (108) zur lokalen Abkühlung des Speichermediums (104) auf eine Kristallisationskeimentstehungstemperatur (508) unterhalb der Umgebungstemperatur (502) aufweist.

5. Verfahren zum Temperieren einer Brennkraftmaschine (102) nach Anspruch 1, mit folgenden Schritten:
- Schmelzen (400) eines kristallisierten Speichermediums (104), welches eine Schmelzpunkt (500) oberhalb einer Umgebungstemperatur aufweist, um Wärme unter Ausnutzung der Enthalpie des Schmelzvorgangs (400) zu speichern;
- Abkühlen (402) des Speichermediums maximal bis auf die Umgebungstemperatur und
- Bereitstellen (404) eines Kristallisationskeims im Speichermedium (104), um eine Kristallisation des Speichermediums (104) zur Freigabe gespeicherter Wärme auszulösen.

6. Verfahren nach Anspruch 5, mit einem weiteren Schritt des Trennens (406) des Kristallisationskeims vom übrigen Speichermedium, bevor das Speichermedium (104) den Schmelzpunkt (500) erreicht.

7. Verfahren nach Anspruch 5 oder 6, wobei zum Bereitstellen (404) des Kristallisationskeims das Speichermedium (104) mit einer thermodynamische Potentialgröße (T, p), insbesondere einer Temperatur (T) oder einem statischen Druck (p) beaufschlagt wird, um den Kristallisationskeim im Speichermedium (104) zu erzeugen.

8. Verfahren nach Anspruch 7, wobei das Speichermedium (104) über einen Beaufschlagungszeitraum von 1s bis 60 s vor oder bei einem Start der Brennkraftmaschine (102) mit der thermodynamischen Potentialgröße (T, p) beaufschlagt wird.

## Claims

1. Internal combustion engine (102), having:
- an oil sump (110);
- a crystallizable storage medium (104) for storing heat by using the enthalpy of a melting process (400), which
i. may have the state of supercooled molten mass (504) at ambient temperature (502), the internal combustion engine being **characterized in that** the storage medium
ii. is arranged in the region of the oil sump (110) at least partially at or below a resting oil level (112) of the oil sump (110) when the internal combustion engine (102) is at rest, and at least partially above an operating oil level (114) of the oil sump (110) when the internal combustion engine (102) is in operation, and
iii. has an inclined surface (116), which is flowed over by oil (118) running back into the oil sump (110) when the internal combustion engine (102) is in operation; and
- a crystal nucleus provider (106) for providing a crystal nucleus in the storage medium (104), in order to initiate a crystallization (506) of the storage medium (104) in the state of supercooled molten mass (504) to release stored heat.

2. Internal combustion engine (102) according to Claim 1, wherein the crystal nucleus provider (106) has a separating device (152) for keeping the crystal nucleus below the melting point (500) thermally separately from the storage medium (104).

3. Internal combustion engine (102) according to Claim 1 or 2, wherein the crystal nucleus provider (106) is designed to apply a thermodynamic potential variable (T, p) to the storage medium (104) in order to create the crystal nucleus in the storage medium (104).

4. Internal combustion engine (102) according to Claim 3, wherein the crystal nucleus provider (106) has a cooling device (108) for locally cooling the storage medium (104) to a crystal nucleus creation temperature (508) below the ambient temperature (502).

5. Method for controlling the temperature of an internal combustion engine (102) according to Claim 1, comprising the following steps:
- melting (400) a crystallized storage medium (104), which has a melting point (500) above an ambient temperature, in order to store heat by using the enthalpy of the melting process (400);
- cooling (402) the storage medium at most down to the ambient temperature and
- providing (404) a crystal nucleus in the storage medium (104), in order to initiate a crystallization of the storage medium (104) to release stored heat.

6. Method according to Claim 5, comprising a further step of separating (406) the crystal nucleus from the rest of the storage medium before the storage medium (104) reaches the melting point (500).

7. Method according to Claim 5 or 6, wherein, to provide (404) the crystal nucleus, a thermodynamic potential variable (T, p), in particular a temperature (T) or a static pressure (p), is applied to the storage medium (104) in order to create the crystal nucleus in the storage medium (104).

8. Method according to Claim 7, wherein the thermodynamic potential variable (T, p) is applied to the storage medium (104) over an application period of 1 s to 60 s before or during starting of the internal combustion engine (102).

## Revendications

1. Moteur à combustion interne (102), comprenant :
- un puisard d'huile (110) ;
- un agent d'accumulation de chaleur (104) cristallisable permettant d'accumuler de la chaleur en utilisant l'enthalpie d'un processus de fusion (400), ledit processus :
i. pouvant présenter l'état d'une masse fondue sous-refroidie (504) à température ambiante (502), le moteur à combustion interne étant **caractérisé en ce que** l'agent d'accumulation de chaleur :
ii. est disposé dans la région du puisard d'huile (110) au moins en partie au niveau ou en dessous d'un niveau d'huile au repos (112) du puisard d'huile (110) lorsque le moteur à combustion interne (102) est au repos et au moins en partie au-dessus d'un niveau d'huile en fonctionnement (114) du puisard d'huile (110) lorsque le moteur à combustion interne (102) est entraîné ; et
iii. comporte une surface inclinée (116) qui, lorsque le moteur à combustion interne (102) est entraîné, est recouverte par l'huile (118) refluant dans le puisard d'huile (110) ; et
- un élément de mise à disposition de germe de cristallisation (106) servant à mettre à disposition un germe de cristallisation dans l'agent d'accumulation de chaleur (104) pour déclencher dans l'état de masse fondue sous-refroidie (504) une cristallisation (506) de l'agent d'accumulation de chaleur (104) en vue de libérer la chaleur accumulée.

2. Moteur à combustion interne (102) selon la revendication 1, l'élément de mise à disposition de germe de cristallisation (106) comportant un dispositif de séparation (152) permettant de conserver le germe de cristallisation en dessous du point de fusion (500) dans une situation d'isolation thermique par rapport à l'agent d'accumulation de chaleur (104).

3. Moteur à combustion interne (102) selon la revendication 1 ou 2, l'élément de mise à disposition de germe de cristallisation (106) étant conçu pour appliquer à l'agent d'accumulation de chaleur (104) une grandeur potentielle thermodynamique (T, p) telle qu'elle permet la production du germe de cristallisation dans l'agent d'accumulation de chaleur (104).

4. Moteur à combustion interne (102) selon la revendication 3, l'élément de mise à disposition de germe de cristallisation (106) comportant un dispositif de refroidissement (108) permettant de refroidir localement l'agent d'accumulation de chaleur (104) à une température de formation de germe de cristallisation (508) inférieure à la température ambiante (502).

5. Procédé de réchauffage d'un moteur à combustion interne (102) selon la revendication 1, avec les étapes suivantes :
- fusion (400) d'un agent d'accumulation de chaleur (104) cristallisé présentant un point de fusion (500) supérieur à la température ambiante en vue d'accumuler la chaleur provenant de l'enthalpie du processus de fusion (400) ;
- refroidissement (402) de l'agent d'accumulation de chaleur au maximum jusqu'à la température ambiante ;
- mise à disposition (404) d'un germe de cristallisation dans l'agent d'accumulation de chaleur (104) en vue de déclencher une cristallisation de l'agent d'accumulation de chaleur (104) pour libérer la chaleur accumulée.

6. Procédé selon la revendication 5, avec une étape supplémentaire de séparation (406) du germe de cristallisation par rapport à l'agent d'accumulation de chaleur restant avant que l'agent d'accumulation de chaleur (104) n'atteigne le point de fusion (500).

7. Procédé selon la revendication 5 ou 6, la mise à disposition (404) du germe de cristallisation permettant d'appliquer à l'agent d'accumulation de chaleur (104) une grandeur potentielle thermodynamique (T, p), notamment une température (T) ou une pression statique (p) servant à produire le germe de cristallisation dans l'agent d'accumulation de chaleur (104).

8. Procédé selon la revendication 7, une grandeur potentielle thermodynamique (T, p) étant appliquée à l'agent d'accumulation de chaleur (104) pendant une durée d'application allant de 1 s à 60 s avant le démarrage ou au démarrage du moteur à combustion interne (102).
